# EUROPÄISCHE PATENTANMELDUNG

(11) **EP 2 835 542 A1**
(43) Veröffentlichungstag der Anmeldung: **11.02.2015**
(21) Anmeldenummer: 13179525.4
(22) Anmeldetag: 07.08.2013
(51) Int. Cl.: F16B 33/06, F16B 25/00

(54) **Selbstschneidende Schraube**

(71) Anmelder: HILTI Aktiengesellschaft, 9494 Schaan (LI)
(72) Erfinder: Neumaier, Tobias, 6830 Rankweil (AT); Hassler, Achim, 9492 Eschen (LI); Sproewitz, Michael, 9470 Buchs (CH)
(74) Vertreter: Hilti Aktiengesellschaft Corporate Intellectual Property

(57) **Zusammenfassung**

Die Erfindung betrifft eine selbstschneidende Schraube, vorzugsweise Betonschraube, mit einem Kopf und einem Schaft, wobei der Schaft einen Gewindeabschnitt, der zumindest eine Gewindewendel trägt, einen gewindefreien Halsabschnitt und einen Übergangsabschnitt aufweist, der zwischen dem Gewindeabschnitt und dem Halsabschnitt angeordnet ist und in dem der Durchmesser des Schafts vom Gewindeabschnitt zum Halsabschnitt hin zunimmt, und wobei der Schaft im Gewindeabschnitt eine umwandlungsgehärtete Randschicht aufweist, welche lediglich einen Teil der Schraube bedeckt. Erfindungsgemäss ist vorgesehen, dass sich die umwandlungsgehärtete Randschicht in den Übergangsabschnitt hinein erstreckt.

## Beschreibung

Die Erfindung betrifft eine selbstschneidende Schraube, vorzugsweise Betonschraube, gemäss dem Oberbegriff des Anspruchs 1. Eine solche Schraube ist ausgestattet mit einem Kopf und einem Schaft, wobei der Schaft einen Gewindeabschnitt, der zumindest eine Gewindewendel trägt, einen, vorzugsweise gewindefreien, Halsabschnitt und einen Übergangsabschnitt aufweist, der zwischen dem Gewindeabschnitt und dem Halsabschnitt angeordnet ist und in dem der Durchmesser des Schafts vom Gewindeabschnitt zum Halsabschnitt hin zunimmt, und wobei der Schaft im Gewindeabschnitt eine umwandlungsgehärtete Randschicht aufweist, welche lediglich einen Teil der Schraube bedeckt. Die Erfindung betrifft auch ein Verfahren zum Herstellen einer Betonschraube.

Aus der WO 12084386 A1 ist ein Verfahren zum Härten eines Schraubankers bekannt. Gemäss WO 12084386 A1 wird ein Rohling karbonitriert und dann abgeschreckt.

Die WO 12084388 A1 beschreibt ein weiteres Verfahren zum Herstellen eines Schraubankers. Bei diesem Verfahren wird der Spitzenbereich eines Rohlings selektiv gehärtet. Die WO 12084388 A1 beschreibt dabei auch einen zweistufigen Wärmebehandlungsprozess bestehend aus Karbonitrieren und Induktionshärten.

Aus der DE 10113946 A1 ist eine gattungsgemässe teilgehärtete Schraube bekannt, bei der gezielt der Spitzenbereich gehärtet ist, um eine besonders gute Schneidwirkung zu erzielen.

Aufgabe der Erfindung ist es, eine selbstschneidende Schraube, die bei geringem Herstellungsaufwand besonders zuverlässig und leistungsfähig ist, sowie ein entsprechendes Herstellungsverfahren anzugeben.

Die Aufgabe wird erfindungsgemäss durch eine Schraube mit den Merkmalen des Anspruchs 1 und ein Verfahren mit den Merkmalen des Anspruchs 8 gelöst. Bevorzugte Ausführungsformen der Schraube sind in den abhängigen Ansprüchen angegeben.

Eine erfindungsgemässe Schraube ist **dadurch gekennzeichnet, dass** sich die umwandlungsgehärtete Randschicht in den Übergangsabschnitt hinein erstreckt.

Ein Grundgedanke der Erfindung kann darin gesehen werden, dass sich die umwandlungsgehärtete Randschicht, die einen Teil der Schraube bedeckt, nicht nur im vorderen Bereich des Gewindeabschnitts erstreckt, sondern dass diese Randschicht auch in den Übergangsabschnitt reicht. Die Erfindung hat erkannt, dass teilgehärtete selbstschneidende Schrauben, die nur an der Spitze des Schafts gehärtet sind, unter Umständen anfällig für ein unerwünschtes Abdrehen des Schafts beim schneidenden Einschrauben in ein hartes Substrat sein können. Die Erfindung hat weiter erkannt, dass dies auf die fertigungsbedingte Geometrie des Schafts zurückzuführen sein kann. Denn bedingt durch den Fertigungsprozess von gewindegewalzten Schrauben ist der Querschnitt und/oder Durchmesser des Gewindeabschnitts in der Regel kleiner als der Querschnitt beziehungsweise Durchmesser des Halsabschnitts, da das Material, welches die radial vom Schaft vorstehende Gewindewendel bildet, vom Schaft stammt und somit dem Schaftquerschnitt nach dem Walzen fehlt. Wird nun der Schaft einer nur im Spitzenbereich gehärteten Schraube beim Einschrauben hohen Torsionsbelastungen ausgesetzt, so können der ungehärtete Teil des vergleichsweise querschnittskleinen Gewindeabschnitts und der vergleichsweise querschnittskleine Übergangsabschnitt unter Umständen eine Schwachstelle bilden, an der die Schraube abdreht. Hier setzt die Erfindung an und schlägt vor, die relativ querschnittskleinen Schaftabschnitte ebenfalls gezielt zu härten. Hierdurch kann die Abdrehfestigkeit dieser Abschnitte gesteigert werden, wobei dort insbesondere Abdrehfestigkeiten erreicht werden können, die der Abdrehfestigkeit des Halsabschnitts vergleichbar sind. Einem unerwünschten Abdrehen des Schafts beim Setzen der Schraube kann somit wirksam entgegengewirkt werden.

Die Erfindung hat also in überraschender Weise erkannt, dass eine umwandlungsgehärtete Randschicht nicht nur im Bereich des freien Endes des Schafts, an dem das Substrat geschnitten wird, vorteilhaft ist, sondern auch in weiter hinten liegenden Schaftabschnitten. Bei einer erfindungsgemässen Schraube handelt es sich aber weiterhin um eine teilgehärtete Schraube, das heisst die Schraube weist auch ungehärtete Oberflächenbereiche auf, was im Hinblick auf die Beständigkeit der Schraube vorteilhaft sein kann.

Die Schraube kann insbesondere eine Betonschraube sein, das heisst eine Schraube, die so ausgelegt ist, dass sie selbstschneidend in ein Betonsubstrat eingeschraubt werden kann. Die drei Abschnitte sind axial versetzt zueinander am Schaft angeordnet, das heisst der Übergangsabschnitt ist axial versetzt zum Gewindeabschnitt angeordnet und der Halsabschnitt axial versetzt zum Übergangsabschnitt. Der Halsabschnitt befindet sich zwischen dem Gewindeabschnitt und dem Kopf und zwischen dem Übergangsabschnitt und dem Kopf. Soweit hier von der Axialrichtung, der Radialrichtung oder/und der Umfangsrichtung die Rede ist, soll sich dies insbesondere auf die Längsachse des Schafts und/oder der Schraube beziehen.

Erfindungsgemäss besteht die Schraube aus einem Metallmaterial, bevorzugt aus Stahl. In der umwandlungsgehärteten Randschicht weist das Metall ein anderes Gefüge auf als in ungehärteten Oberflächenbereichen und/oder im angrenzenden Kern der Schraube, insbesondere einen höheren Martensitgehalt. Die umwandlungsgehärtete Randschicht kann insbesondere induktiv gehärtet sein. Im Bereich der umwandlungsgehärteten Randschicht weist die Schraube eine lokal erhöhte Oberflächenhärte auf. Erfindungsgemäss bedeckt die umwandlungsgehärteten Randschicht lediglich einen Teil der Schraube, insbesondere kann die Randschicht vom Kopf beanstandet sein. Der Härteunterschied zwischen Oberflächenbereichen der Schraube, die mit der umwandlungsgehärteten Randschicht bedeckt sind, und ungehärteten Oberflächenbereichen beträgt bevorzugt 80 HV1 oder mehr. Vorzugsweise reicht die umwandlungsgehärtete Randschicht bis an das freie Ende des Schaftes, insbesondere weil dort die Schneidbelastung am grössten sein kann.

Der Übergangsabschnitt kann gewindefrei, das heisst ohne Gewindewendel, ausgebildet sein. Es kann aber auch vorgesehen sein, dass die zumindest eine Gewindewendel des Gewindeabschnitts in den Übergangsabschnitt reicht und dort ausläuft. Der Halsabschnitt ist bevorzugt gewindefrei. In der vorliegenden Beschreibung wird die Gewindewendel als vom Schaft separates Teil angesehen. Unter dem Schaftdurchmesser im Gewindeabschnitt wird also der Durchmesser des Schafts ohne Gewindewendel, das heisst der Gewindekerndurchmesser, verstanden. Die Gewindewendel steht radial nach aussen vom Schaft vor.

Der Kopf kann zur lösbar drehfesten Kopplung mit einem Setzwerkzeug dienen, zum Beispiel mit einem Tangentialschlagschrauber oder einem Drehmomentschlüssel. Er kann beispielsweise eine Polygonalstruktur, vorzugsweise einen Aussenmehrkant, insbesondere einen Aussensechskant, aufweisen.

Besonders bevorzugt ist es, dass die umwandlungsgehärtete Randschicht in den Halsabschnitt reicht. Hierdurch kann in besonders einfacher Weise eine besonders hohe Zuverlässigkeit erreicht werden, da der Übergangsabschnitt auch bei grösseren Toleranzen besonders zuverlässig gehärtet sein kann. Zweckmässigerweise bedeckt die umwandlungsgehärtete Randschicht aber allenfalls einen Teil des Halsabschnitts, insbesondere da ein Härten in Kopfnähe fertigungstechnisch schwierig und für die Leistung und Zuverlässigkeit der Schraube unter Umständen sogar nachteilig sein kann. Besonders vorteilhaft ist es daher auch, dass die umwandlungsgehärtete Randschicht vom Kopf beabstandet ist. Die Randschicht kann auch vom Halsabschnitt beabstandet sein.

Eine weitere vorteilhafte Ausgestaltung liegt darin, dass der Schaft im Gewindeabschnitt und/oder im Halsabschnitt eine zylindrische Mantelfläche aufweist. Dies kann fertigungstechnisch vorteilhaft sein. Im Übergangsabschnitt kann die Mantelfläche des Schafts zum Beispiel konisch sein.

Insbesondere kann vorgesehen sein, dass sich die umwandlungsgehärtete Randschicht über den gesamten Gewindeabschnitt erstreckt, was die Leistung und Zuverlässigkeit noch weiter erhöhen kann. Die umwandlungsgehärtete Randschicht erstreckt sich insbesondere auch auf zumindest einen Teil der Gewindewendel, vorzugsweise auf der gesamten Gewindewendel.

Eine andere zweckmässige Ausgestaltung der Erfindung liegt darin, dass die Dicke der umwandlungsgehärteten Randschicht zum freien Ende des Schafts hin zunimmt. Demgemäss ist die Randschicht dort besonders dick, wo die Gewindewendel eine erhöhte Schneidwirkung entfalten muss, was zu einer besonders guten Setzbarkeit und Zuverlässigkeit führen kann.

Beispielsweise um ein Einführen in ein Bohrloch zu erleichtern, kann der Schaft an seinem freien Ende einen Spitzenabschnitt aufweisen, in dem der Durchmesser des Schafts mit zunehmendem Abstand vom Kopf abnimmt. Sofern ein Spitzenabschnitt vorgesehen ist, ist der Gewindeabschnitt zwischen diesem Spitzenabschnitt und dem Übergangsabschnitt angeordnet. Die Gewindewendel kann sich, muss sich aber nicht in den Spitzenabschnitt hinein erstrecken.

Die erfindungsgemässe Schraube weist vorzugsweise einen Stahlwerkstoff mit einem Kohlenstoffgehalt von 0.35% bis 0.5% auf. Hierdurch kann eine Kernfestigkeit von ca. 230-260 HV1 erzielt werden. Durch den Einsatz von Stählen mit einem Kohlenstoffgehalt zwischen 0.35% und 0.5% ist das Härtepotential hoch genug, damit ein zusätzlicher Karbonitrierprozess entfallen kann.

Die Erfindung betrifft auch ein Verfahren zum Herstellen einer selbstschneidenden Schraube, insbesondere einer Betonschraube, bei dem
- ein Schraubenrohling mit einem Kopf und einem Schaft bereitgestellt wird, wobei der Schaft einen Gewindeabschnitt, der zumindest eine Gewindewendel trägt, einen, vorzugsweise gewindefreien, Halsabschnitt, und einen Übergangsabschnitt aufweist, der zwischen dem Gewindeabschnitt und dem Halsabschnitt angeordnet ist und in dem der Durchmesser des Schafts vom Gewindeabschnitt zum Halsabschnitt hin zunimmt, und
- der Schraubenrohling im Gewindeabschnitt und im Übergangsabschnitt induktionsgehärtet wird.
Hiermit kann in besonders einfacher Weise eine erfindungsgemässe Schraube erhalten werden.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
Figur 1: eine Längsschnittansicht einer erfindungsgemässen Betonschraube; und
Figur 2: eine Detailansicht der Schraube aus Figur 1 im Bereich des Übergangsabschnitts.

Die Figuren zeigen ein Ausführungsbeispiel einer erfindungsgemässen Schraube. Die Schraube weist einen länglichen Schaft 20 auf, an dem endseitig ein Schraubenkopf 10 angeordnet ist. Der Schraubenkopf 10 kann eine Aussenpolygonalstruktur, beispielsweise einen Aussensechskant, oder/und eine Innenpolygonalstruktur, jeweils zum drehfesten Ankoppeln eines Setzwerkzeugs, aufweisen.

Der Schaft 20 weist drei unterscheidbare Abschnitte auf, die axial versetzt, das heisst in Richtung der Längsachse 100 der Schraube versetzt, am Schaft 20 ausgebildet sind: einen Halsabschnitt 21, einen Übergangsabschnitt 22 und einen Gewindeabschnitt 23. Ausgehend vom Kopf 10 folgt dabei zunächst der Halsabschnitt 21, dann der Übergangsabschnitt 22 und mit weiterem Abstand zum Kopf 10 schliesslich der Gewindeabschnitt 23. Im Gewindeabschnitt 23 ist auf der Mantelfläche des Schafts 20 zumindest eine Gewindewendel 29 zum selbstschneidenden Einschrauben in ein Betonsubstrat vorgesehen.

Die drei Abschnitte 21, 22 und 23 unterscheiden sich insbesondere in ihrem Querschnitt und/oder Durchmesser d. Soweit hier vom Querschnitt und/oder Durchmesser d des Schafts 20 sowie seiner drei Abschnitte 21, 22 und 23 die Rede ist, soll hier die Gewindewendel 29 als vom Schaft 20 separates Element angesehen werden, die bei der Durchmesserbestimmung unberücksichtigt bleibt, das heisst unter dem Durchmesser d wird insbesondere der Gewindekerndurchmesser verstanden. Der grösste Schaftdurchmesser d₁ ist im Halsabschnitt 21 gegeben. Im anschliessenden Übergangsabschnitt 22 nimmt der Schaftdurchmesser d zum freien Ende 24 des Schafts 20 hin ab und erreicht im Gewindeabschnitt 23 den Durchmesser d₂, wobei d₂ < d₁ ist. Der Umstand, dass d₂ < d₁ ist, rührt in der Regel von der Materialbilanz beim Formen der Gewindewendel in einem Gewindewalzprozess oder auch einem Gewindeschneideprozess her. Der Gewindeflankendurchmesser f der Gewindewendel 29 kann grösser als der Schaftdurchmesser d₁ im Halsabschnitt 21 sein.

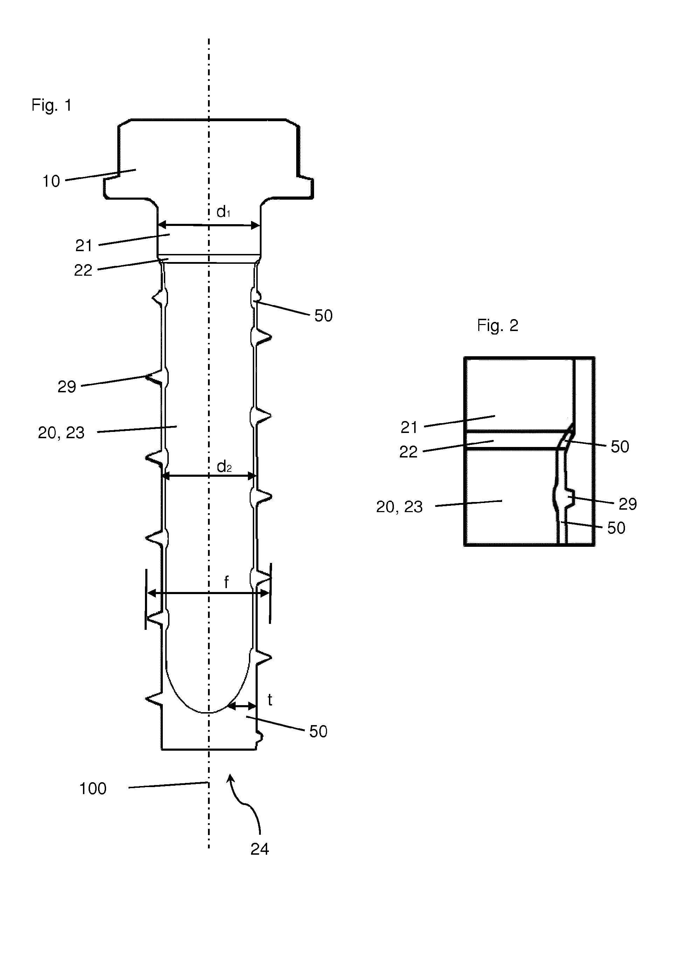

Die Schraube weist eine umwandlungsgehärtete, insbesondere induktionsgehärtete, Randschicht 50 auf, die lediglich einen Teil der Schraube bedeckt. Die umwandlungsgehärtete Randschicht 50 erstreckt sich über den gesamten Gewindeabschnitt 23. Erfindungsgemäss reicht die Randschicht 50 dabei bis in den Übergangsabschnitt 22, wie insbesondere in Figur 2 zu erkennen ist. Wie in Figur 2 beispielhaft dargestellt ist, kann die Randschicht 50 dabei auch bis in den Halsabschnitt 21 reichen. Dies ist nach der Erfindung jedoch nicht zwingend. Vom Kopf 10 ist die umwandlungsgehärtete Randschicht 50 jedoch beabstandet. Wie Figur 1 zeigt, nimmt die Tiefe t der Randschicht 50 im Gewindeabschnitt 23 zum freien Ende 24 des Schafts 20 hin zu.

## Patentansprüche

1. Selbstschneidende Schraube, vorzugsweise Betonschraube, mit einem Kopf (10) und einem Schaft (20),
wobei der Schaft (20) einen Gewindeabschnitt (23), der zumindest eine Gewindewendel (29) trägt, einen Halsabschnitt (21) und einen Übergangsabschnitt (22) aufweist, der zwischen dem Gewindeabschnitt (23) und dem Halsabschnitt (21) angeordnet ist und in dem der Durchmesser des Schafts (20) vom Gewindeabschnitt (23) zum Halsabschnitt (21) hin zunimmt,
und wobei der Schaft (20) im Gewindeabschnitt (23) eine umwandlungsgehärtete Randschicht (50) aufweist, welche lediglich einen Teil der Schraube bedeckt,
**dadurch gekennzeichnet,**
**dass** sich die umwandlungsgehärtete Randschicht (50) in den Übergangsabschnitt (22) hinein erstreckt.

2. Schraube nach Anspruch 1,
**dadurch gekennzeichnet,**
**dass** die umwandlungsgehärtete Randschicht (50) in den Halsabschnitt (21) reicht.

3. Schraube nach einem der vorstehenden Ansprüche,
**dadurch gekennzeichnet,**
**dass** die umwandlungsgehärtete Randschicht (50) vom Kopf (10) beabstandet ist.

4. Schraube nach einem der vorstehenden Ansprüche,
**dadurch gekennzeichnet,**
**dass** der Schaft (20) im Gewindeabschnitt (23) und/oder im Halsabschnitt (21) eine zylindrische Mantelfläche aufweist.

5. Schraube nach einem der vorstehenden Ansprüche,
**dadurch gekennzeichnet,**
**dass** sich die umwandlungsgehärtete Randschicht (50) über den gesamten Gewindeabschnitt (23) erstreckt.

6. Schraube nach einem der vorstehenden Ansprüche,
**dadurch gekennzeichnet,**
**dass** die Dicke (t) der umwandlungsgehärteten Randschicht (50) zum freien Ende (24) des Schafts (20) hin zunimmt.

7. Schraube nach einem der vorstehenden Ansprüche,
**dadurch gekennzeichnet,**
**dass** der Schaft (20) an seinem freien Ende (24) einen Spitzenabschnitt aufweist, in dem der Durchmesser des Schafts (20) mit zunehmendem Abstand vom Kopf (10) abnimmt.

8. Verfahren zum Herstellen einer selbstschneidenden Schraube, insbesondere einer Betonschraube, bei dem
- ein Schraubenrohling mit einem Kopf (10) und einem Schaft (20) bereitgestellt wird, wobei der Schaft (20) einen Gewindeabschnitt (23), der zumindest eine Gewindewendel (29) trägt, einen Halsabschnitt (21) und einen Übergangsabschnitt (22) aufweist, der zwischen dem Gewindeabschnitt (23) und dem Halsabschnitt (21) angeordnet ist und in dem der Durchmesser des Schafts (20) vom Gewindeabschnitt (23) zum Halsabschnitt (21) hin zunimmt, und
- der Schraubenrohling im Gewindeabschnitt (23) und im Übergangsabschnitt (22) induktionsgehärtet wird.
